# EUROPEAN PATENT SPECIFICATION

(11) **EP 3 793 040 B1**
(45) Date of publication and mention of the grant of the patent: **08.11.2023**
(21) Application number: 18929082.8
(22) Date of filing: 21.12.2018
(51) Int. Cl.: H01R 13/64, A47J 27/21

(54) **COUPLER MOUNTING STRUCTURE FOR ELECTRIC APPLIANCE, AND ELECTRIC APPLIANCE**
KOPPLERMONTAGESTRUKTUR FÜR EIN ELEKTRISCHES GERÄT UND ELEKTRISCHES GERÄT
STRUCTURE DE MONTAGE DE COUPLEUR POUR APPAREIL ÉLECTRIQUE, ET APPAREIL ÉLECTRIQUE

(30) Priority: 09.08.2018 CN 201810903018
(43) Date of publication of application: 17.03.2021
(73) Proprietor: Gree Electric Appliances, Inc. of Zhuhai, Zhuhai, Guangdong 519070 (CN)
(72) Inventor: CHEN, Dongdong, Zhuhai, Guangdong 519070 (CN); CHEN, Liang, Zhuhai, Guangdong 519070 (CN); LI, Jinbin, Zhuhai, Guangdong 519070 (CN); GAO, Yuangui, Zhuhai, Guangdong 519070 (CN); LI, Wenbin, Zhuhai, Guangdong 519070 (CN); LI, Yifeng, Zhuhai, Guangdong 519070 (CN); YIN, Zhixiong, Zhuhai, Guangdong 519070 (CN); LI, Jiahong, Zhuhai, Guangdong 519070 (CN)
(74) Representative: V.O.
(86) International application number: PCT/CN2018/122857
(87) International publication number: WO 2020/029515

(56) References cited:
- CN-U- 203 483 289
- CN-U- 203 483 289
- CN-U- 205 509 099
- CN-U- 207 409 702
- CN-U- 208 637 714
- DE-U1-202004 010 807
- KR-A- 20150 040 094
- US-A1- 2018 083 388

## Description

### Technical Field

The invention relates to a technical field of electric appliances, and in particular to a mounting structure of a coupler for an electric appliance and the electric appliance.

### Background

A coupler is also called an adapter, which is a device of transmitting power between systems and may divide a path of microwave power into several paths in proportion in a microwave system. The coupler may be an independent hardware interface device allowing hardware or an electronic interface to be connected with other hardware or electronic interfaces. The coupler is an important part in a fireproof test of an electric appliance. If the coupler is mounted in a reverse direction, a live wire terminal is in contact with conducting liquid more easily, thereby leading to potential safety hazards. In addition, if the coupler is mounted rightly or reversely, wiring inside a whole machine is easily messed up, thereby leading to poor consistency in an Electro Magnetic Compatibility (EMC) test. Therefore, a fool-proof design is required when mounting the coupler.

A Mounting Structure of Coupler is disclosed in Document DE202004010907U1. An assembly of mounting structure and a coupler for an electric appliance according to the preamble of claim 1 is described in CN2034832U.

### Summary

The invention is set out in the appended set of claims.In view of this, some embodiments of the invention provide an assembly of mounting structure and a coupler for an electric appliance and the electric appliance. Through cooperation between a fool-proof structure and a plug-in terminal of a coupler, the coupler is ensured to be correctly mounted.

An embodiment of the invention adopts the following technical solution.

A coupler mounting structure for an electric appliance is provided, the coupler includes a coupler body and a plug-in terminal, a mounting structure includes a mounting groove allowing the coupler to be inserted, and a fool-proof structure is disposed on an inside of the mounting groove. The fool-proof structure is constructed such that: when the coupler is inserted into the mounting groove in a first direction, the fool-proof structure is inserted into a space between the plug-in terminals, so that the coupler is able to be inserted in place; and when the coupler is inserted into the mounting groove in other directions outside the first direction, the fool-proof structure is able to generate interference with the plug-in terminal, so that the coupler is blocked from being inserted.

In an embodiment, the electric appliance includes a mainboard and a support for mounting the mainboard, and the fool-proof structure is disposed on an upper side of the support.

In an embodiment, the fool-proof structure is constructed as a bulge structure extending upward from the support, and the bulge structure is positioned on the inside of the mounting groove.

In an embodiment, the electric appliance includes an electric appliance body, and the fool-proof structure and the mounting groove are disposed on a side of the electric appliance body.

In an embodiment, the fool-proof structure is constructed as a bulge structure extending toward the mounting groove from the electric appliance body, and the bulge structure is positioned on the inside of the mounting groove.

In an embodiment, the fool-proof structure includes a connecting portion and a fool-proof portion, wherein, the connecting portion is configured to connect the fool-proof structure onto the electric appliance, and the bulge structure forms the fool-proof portion.

In an embodiment, the other directions outside the first direction include a second direction, and the second direction differs by 180° from the first direction.

In the invention, the coupler mounting structure includes a first positioning structure, the first positioning structure is disposed at an entrance of the mounting groove, and is cooperated with a second positioning structure on the coupler. Through cooperation between the first positioning structure and the second positioning structure, positioning for mounting of the coupler is achieved.

In an embodiment, the first positioning structure includes a fastening rib formed at the entrance of the mounting groove, and the fastening rib is configured to fasten connection of the first positioning structure and the second positioning structure.

On the other hand, the invention adopts the following technical solution.

An electric appliance includes the abovementioned coupler mounting structure. The assembly of coupler and mounting structure for the electric appliance and the electric appliance provided by some embodiments of the invention ensure that the coupler is mounted correctly through the cooperation between the fool-proof structure and the plug-in terminal of the coupler.

### Brief Description of the Drawings

Through the following description of the embodiments of the invention with reference to the drawings, the above and other objectives, features and advantages of the invention shall be clearer. In the drawings,
Fig. 1 shows an exploded diagram of a coupler mounting structure provided by the invention.
Fig. 2 shows a local schematic diagram of a coupler mounting structure provided by the invention.

In the drawings,
1. Electric appliance body; 2. Mainboard; 3. Support; 4. Coupler; 41. Coupler body; 42. Plug-in terminal; 43. Second positioning structure; 5. Mounting structure; 51. mounting groove; 52. Fool-proof structure; 521. Fool-proof portion; 522. Connecting portion; 53. First positioning structure; and 531. Fastening rib.

### Detailed Description of the Embodiments

The invention is described below on the basis of the embodiments, but the invention is not limited to these embodiments only. In detailed descriptions of the invention below, some specific details are described in detail. For those skilled in the art, the invention is completely understandable if the description of these details is not available. In order to avoid confusion about the essence of the invention, a known method, a known process, a known flow and a known element are not described in detail.

In addition, those of ordinary skill in the art should understand that these drawings provided herein are used for describing the objective, and are not necessarily drawn to scale.

In description of the invention, it should be understood that terms as "first", "second" and the like are used for describing the objective, rather than indicating or implying relative significance. In addition, in the description of the invention, unless otherwise specified, term "multiple" means two or more than two.

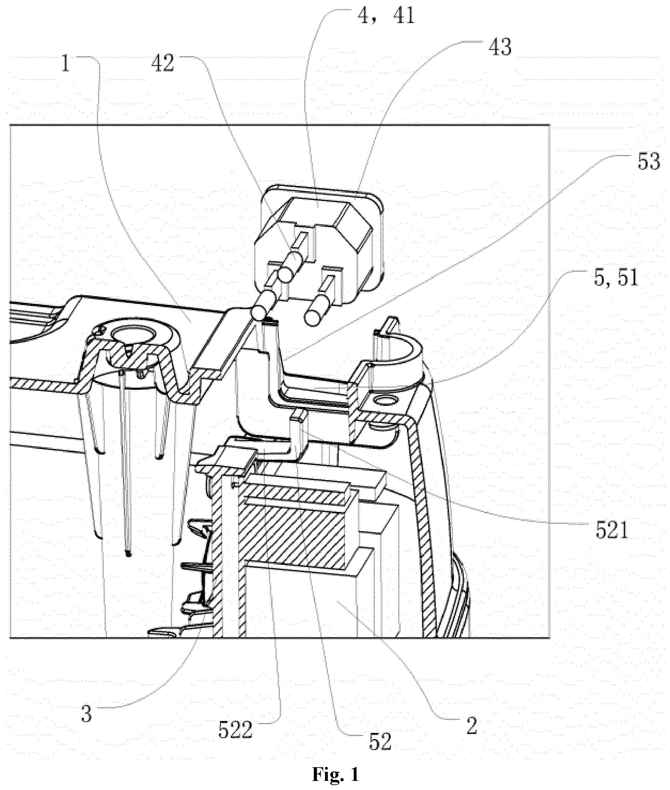

The invention provides an assembly comprising a mounting structure 5 and a coupler 4 for an electric appliance and the electric appliance provided with the mounting structure, as shown in Fig. 1, the coupler 4 includes a coupler body 41 and a plug-in terminal 42, the mounting structure 5 includes a mounting groove 51 allowing the coupler 4 to be inserted, a fool-proof structure 52 is disposed on an inside of the mounting groove 5, the fool-proof structure 52 is constructed such that: when the coupler 4 is inserted into the mounting groove 51 in a first direction, the fool-proof structure 52 is inserted into a space between the plug-in terminals 42, so that the coupler 4 is able to be inserted in place; and when the coupler 4 is inserted into the mounting groove 51 in other directions outside the first direction, the fool-proof structure 52 is able to generate interference with the plug-in terminal 42, so that the coupler 4 is blocked from being inserted. In this way, the coupler 4 is avoided from being mounted reversely, the coupler 4 is normally mounted, and accordingly potential safety hazards due to reverse mounting is avoided.

As shown in Fig. 1, in an embodiment, the electric appliance includes a mainboard 2 and a support 3 for mounting the mainboard 2. The fool-proof structure 52 is disposed on an upper side of the support 3, and fixedly connected with the support 3, as to ensure connection stability of the fool-proof structure 52 and overall strength of the mounting structure 5. In an embodiment, the fool-proof structure 52 is constructed as a bulge structure extending upward from the support 3, and the bulge structure is positioned on the inside of the mounting groove 51 (an inside in the invention means one side facing the inner side of the electric appliance). When the coupler 4 is mounted in a correct direction, the fool-proof structure 52 is rightly positioned in a middle of the plug-in terminals of the coupler 4. When the coupler 4 turns over 180° for mounting, the fool-proof structure 52 is just abutted against the plug-in terminal of the coupler 4, so that the plug-in terminal may not be mounted in place, and in this way the coupler 4 is ensured to be correctly mounted.

In an embodiment, as shown in Fig. 1, the electric appliance includes an electric appliance body 1, and the fool-proof structure 52 and the mounting groove 51 are disposed on a side of the electric appliance body 1. The fool-proof structure 52 is constructed as a bulge structure extending toward the mounting groove 51 from the electric appliance body 1, and the bulge structure is positioned on the inside of the mounting groove 51. Similarly, when the coupler 4 is mounted in the correct direction, the fool-proof structure 52 is just positioned in the middle of the plug-in terminals of the coupler 4. When the coupler 4 turns over 180° for mounting, the fool-proof structure 52 is just abutted against at least one plug-in terminal of the coupler 4, so that the plug-in terminal may not be mounted in place, and in this way the coupler 4 is ensured to be correctly mounted.

In an embodiment, as shown in Fig. 1, the fool-proof structure 52 includes a connecting portion 522 and a fool-proof portion 521, herein, the connecting portion 522 is configured to connect the fool-proof structure 52 onto the electric appliance, and the bulge structure forms the fool-proof portion 521, namely, the connecting portion 522 is fixedly connected with the support 3 or fixedly connected with the electric appliance body 1, and the fool-proof portion 521 is configured to perform a fool-proof function for mounting of the coupler 4. The coupler 4 includes three plug-in terminals 42, and the three plug-in terminals 42 are not in one straight line, namely, connecting lines of positions of the three plug-in terminals 42 form a triangle, in some embodiments, form an isosceles triangle. When the coupler 4 is mounted in the correct direction, the fool-proof portion 521 is just positioned in the middle of the plug-in terminals of the coupler 4. When the coupler 4 turns over 180° for mounting, the fool-proof portion 521 is just abutted against the plug-in terminal of the coupler 4, so that the plug-in terminal may not be mounted in place, reverse mounting of the coupler 4 is avoided, potential safety hazards caused by reverse mounting are avoided, and overall safety of the electric appliance is improved. In addition, the fool-proof portion 521 is of column-shaped or block-shaped or plate-shaped. In some embodiments, fool-proof portion 521 is of column-shaped, in this way fool-proof effect during mounting of the coupler 4 is achieved more conveniently. When the coupler 4 is mounted in a first direction, namely, mounted in the correct direction, the fool-proof portion 521 is required to pass through a place between the two plug-in terminals during mounting because the fool-proof portion 521 is positioned between the plug-in terminals 42 of the coupler 4. The column-shaped fool-proof portion 521 is configured, in this way the plug-in terminal 42 more easily passes through on the premise that an excircle diameter of the column-shaped fool-proof portion 521 is equal to or approximately equal to a distance between the two plug-in terminals 42. However, when the fool-proof portion 521 has a maximum width, best blocking effect is achieved for mounting when the coupler 4 is positioned at a non-first direction, and the fool-proof portion 521 has better fool-proof effect.

It is to be noted that, in some embodiments, the connecting portion 522 and the fool-proof portion 521 of the fool-proof structure 52 is integrated, as an alternative, connected together through threads or connected in a clamping manner or connected together through bonding. In an embodiment, the connecting portion 522 and the fool-proof portion 521 are integrated, as to ensure overall strength of the fool-proof structure 52. In addition, the fool-proof structure 52 and the support 3 is able to be integrally molded, or the fool-proof structure 52 and the electric appliance body 1 are integrated, or connected together through threads or connected in a clamping manner or connected together through bonding. Connecting strength of the fool-proof structure 52 and the support 3 or the electric appliance body 1 is higher when the integrated structure is taken. Processing and fabrication of the support 3 and the fool-proof structure 52 is facilitated when a split structure is taken. If the fool-proof structure 52 is damaged later, replacement and maintenance will be facilitated, and accordingly maintenance cost is saved to a certain extent.

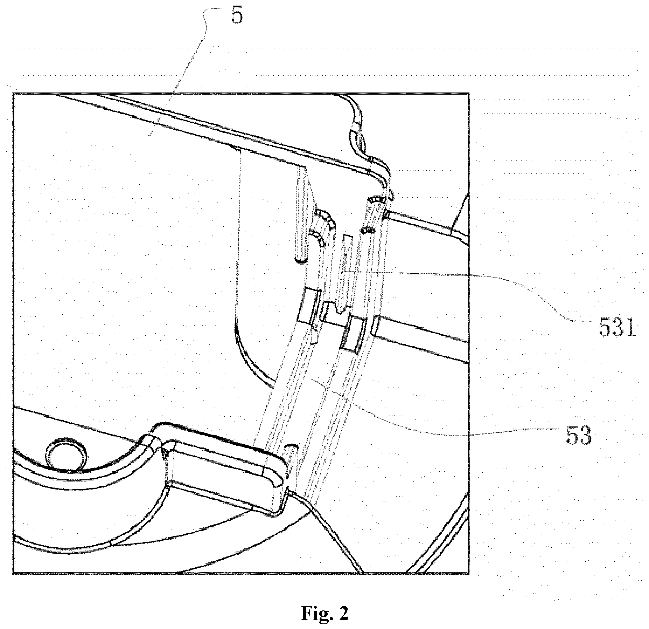

In an embodiment, as shown in Fig. 1 and Fig. 2, the mounting structure 5 of the coupler 4 further includes a first positioning structure 53 disposed at an entrance of the mounting groove 51 and cooperated with a second positioning structure 43 on the coupler 4. Through cooperation of the first positioning structure 53 and the second positioning structure 43, positioning for mounting of the coupler 4 is achieved. In an embodiment, the first positioning structure includes a fastening rib 531 formed at the entrance of the mounting groove. The first positioning structure 53 includes a positioning groove cooperating with the second positioning structure 43. The fastening rib 531 is positioned on a groove wall of the positioning groove, the second positioning structure 43 is inserted into the positioning groove, the second positioning structure 43 and the first positioning structure 53 are pressed tightly through the fastening rib 531, in this way fastening and connection of the first positioning structure 53 and the second positioning structure 43 are achieved.

It is easy for those skilled in the art to understand that all of the abovementioned optional solutions may be freely combined and superimposed without conflict.

It is to be understood that the abovementioned embodiments are exemplary only, rather than restrictive. The invention is only limited by the scope of the claims.

## Claims

1. An assembly comprising a mounting structure (5) of a coupler (4) for an electric appliance, the assembly further comprising the coupler (4) which comprises a coupler body (41) and a plug-in terminal (42), wherein the mounting structure (5) comprises a mounting groove (51) allowing the coupler (4) to be inserted, **characterized in that** a fool-proof structure (52) is disposed on an inside of the mounting groove (51), the fool-proof structure (52) is configured such that: when the coupler (4) is inserted into the mounting groove (51) in a first direction, the fool-proof structure (52) is inserted into a space between the plug-in terminals (42), so that the coupler (4) is able to be inserted in place; and when the coupler (4) is inserted into the mounting groove (51) in other directions outside the first direction, the fool-proof structure (52) is able to generate interference with the plug-in terminal (42), so that the coupler (4) is blocked from being inserted; and **in that** the mounting structure (5) comprises a first positioning structure (53), disposed at an entrance of the mounting groove (51), and is cooperated with a second positioning structure (43) on the coupler (4); and through cooperation between the first positioning structure (53) and the second positioning structure (43), positioning for mounting of the coupler (4) is achieved.

2. The assembly as claimed in claim 1 and further comprising the electric appliance, wherein, the electric appliance comprises a mainboard (2) and a support (3) for mounting the mainboard (2), and the fool-proof structure (52) is disposed on an upper side of the support (3).

3. The assembly as claimed in claim 2, wherein, the fool-proof structure (52) is constructed as a bulge structure extending upward from the support (3).

4. The assembly as claimed in claim 1 and further comprising the electric appliance, wherein, the electric appliance comprises an electric appliance body (1), and the fool-proof structure (52) and the mounting groove (51) are disposed on a side of the electric appliance body (1).

5. The assembly as claimed in claim 4, wherein, the fool-proof structure (52) is constructed as a bulge structure extending toward the mounting groove (51) from the electric appliance body (1)

6. The assembly as claimed in claim 3 or 5, wherein, the fool-proof structure (52) comprises a connecting portion (522) and a fool-proof portion (521) connected with the connecting portion (522), wherein, the connecting portion (522) is fixedly connected with the support (3) or fixedly connected with the electric appliance body (1), the connecting portion (522) is configured to connect the fool-proof structure (52) onto the electric appliance, and the bulge structure forms the fool-proof portion (521).

7. The assembly as claimed in claim 1 or 6, wherein, the other directions outside the first direction comprise a second direction, and the second direction differs by 180° from the first direction.

8. The assembly as claimed in claim 1, wherein, the first positioning structure comprises a fastening rib (531) formed at the entrance of the mounting groove (51), and the fastening rib (531) is configured to fasten connection of the first positioning structure (53) and the second positioning structure (43).

## Patentansprüche

1. Baugruppe, die eine Montagestruktur (5) einer Kupplung (4) für ein elektrisches Gerät umfasst, wobei die Baugruppe ferner die Kupplung (4) umfasst, die einen Kupplungskörper (41) und einen Steckanschluss (42) umfasst, wobei die Montagestruktur (5) eine Montagenut (51) umfasst, die das Einsetzen der Kupplung (4) ermöglicht, **dadurch gekennzeichnet, dass** eine fehlersichere Struktur (52) auf einer Innenseite der Montagenut (51) angeordnet ist, wobei die fehlersichere Struktur (52) so eingerichtet ist, dass: wenn die Kupplung (4) in einer ersten Richtung in die Montagenut (51) eingesetzt wird, wird die fehlersichere Struktur (52) in einen Raum zwischen den Steckanschlüssen (42) eingeführt wird, sodass die Kupplung (4) eingesetzt werden kann; und, wenn die Kupplung (4) in anderen Richtungen außerhalb der ersten Richtung in die Montagenut (51) eingesetzt wird, die fehlersichere Struktur (52) eine Behinderung mit den Steckanschlüssen (42) erzeugen kann, so dass die Kupplung (4) nicht eingesetzt werden kann; und dass die Montagestruktur (5) eine erste Positionierungsstruktur (53) umfasst, die an einem Eingang der Montagenut (51) angeordnet ist, und mit einer zweiten Positionierungsstruktur (43) an der Kupplung (4) zusammenarbeitet; und dass durch die Zusammenarbeit zwischen der ersten Positionierungsstruktur (53) und der zweiten Positionierungsstruktur (43) eine Positionierung zum Montieren der Kupplung (4) erreicht wird.

2. Baugruppe nach Anspruch 1 und ferner umfassend das elektrische Gerät, wobei das elektrische Gerät ein Mainboard (2) und einen Träger (3) zum Montieren des Mainboards (2) umfasst, und die fehlersichere Struktur (52) auf einer Oberseite des Trägers (3) angeordnet ist.

3. Baugruppe nach Anspruch 2, wobei die fehlersichere Struktur (52) als eine Wölbungsstruktur aufgebaut ist, die sich von der Stütze (3) nach oben erstreckt.

4. Baugruppe nach Anspruch 1, die ferner das elektrische Gerät umfasst, wobei das elektrische Gerät einen elektrischen Gerätekörper (1) umfasst und die fehlersichere Struktur (52) und die Befestigungsnut (51) auf einer Seite des elektrischen Gerätekörpers (1) angeordnet sind.

5. Baugruppe nach Anspruch 4, wobei die fehlersichere Struktur (52) als eine Wölbungsstruktur aufgebaut ist, die sich in Richtung der Befestigungsnut (51) vom Körper des elektrischen Gerätes (1) erstreckt

6. Baugruppe nach Anspruch 3 oder 5, wobei die fehlersichere Struktur (52) einen Verbindungsabschnitt (522) und einen fehlersicheren Abschnitt (521) umfasst, der mit dem Verbindungsabschnitt (522) verbunden ist, wobei der Verbindungsabschnitt (522) fest mit dem Träger (3) verbunden oder fest mit dem elektrischen Gerätekörper (1) verbunden ist, der Verbindungsabschnitt (522) so eingerichtet ist, dass er die fehlersichere Struktur (52) mit dem elektrischen Gerät verbindet, und die Wölbungsstruktur den fehlersicheren Abschnitt (521) bildet.

7. Baugruppe nach Anspruch 1 oder 6, wobei die anderen Richtungen außerhalb der ersten Richtung eine zweite Richtung umfassen, und die zweite Richtung sich um 180° von der ersten Richtung unterscheidet.

8. Baugruppe nach Anspruch 1, wobei die erste Positionierungsstruktur eine Befestigungsrippe (531) umfasst, die am Eingang der Befestigungsnut (51) ausgebildet ist, und die Befestigungsrippe (531) dazu eingerichtet ist, die Verbindung der ersten Positionierungsstruktur (53) und der zweiten Positionierungsstruktur (43) zu schließen.

## Revendications

1. Ensemble comprenant une structure de montage (5) d'un coupleur (4) pour un appareil électrique, l'ensemble comprenant en outre le coupleur (4) qui comprend un corps de coupleur (41) et une borne enfichable (42), dans lequel la structure de montage (5) comprend une rainure de montage (51) permettant d'insérer le coupleur (4), **caractérisé en ce qu'**une structure infaillible (52) est disposée sur l'intérieur de la rainure de montage (51), la structure infaillible (52) est configurée de sorte que : lorsque le coupleur (4) est inséré dans la rainure de montage (51) dans une première direction, la structure infaillible (52) est insérée dans un espace entre les bornes enfichables (42), de sorte que le coupleur (4) peut être inséré en place ; et lorsque le coupleur (4) est inséré dans la rainure de montage (51) dans d'autres directions en dehors de la première direction, la structure infaillible (52) peut interférer avec la borne enfichable (42), de façon à empêcher l'insertion du coupleur (4) ; et **en ce que** la structure de montage (5) comprend une première structure de positionnement (53), disposée à une entrée de la rainure de montage (51), et coopère avec une seconde structure de positionnement (43) sur le coupleur (4) ; et par la coopération entre la première structure de positionnement (53) et la seconde structure de positionnement (43), le positionnement pour le montage du coupleur (4) est obtenu.

2. Ensemble selon la revendication 1, comprenant en outre l'appareil électrique,
dans lequel l'appareil électrique comprend une carte mère (2) et un support (3) pour le montage de la carte mère (2), et la structure infaillible (52) est disposée sur un côté supérieur du support (3).

3. Ensemble selon la revendication 2, dans lequel la structure infaillible (52) est construite comme une structure bombée s'étendant vers le haut à partir du support (3).

4. Ensemble selon la revendication 1, comprenant en outre l'appareil électrique,
dans lequel, l'appareil électrique comprend un corps d'appareil électrique (1), et la structure infaillible (52) et la rainure de montage (51) sont disposées sur un côté du corps d'appareil électrique (1).

5. Ensemble selon la revendication 4, dans lequel la structure infaillible (52) est construite comme une structure bombée s'étendant vers la rainure de montage (51) à partir du corps d'appareil électrique (1).

6. Ensemble selon la revendication 3 ou 5, dans lequel la structure infaillible (52) comprend une partie de connexion (522) et une partie infaillible (521) connectée à la partie de connexion (522), dans lequel la partie de connexion (522) est connectée de manière fixe au support (3) ou connectée de manière fixe au corps d'appareil électrique (1), la partie de connexion (522) est configurée pour connecter la structure infaillible (52) à l'appareil électrique, et la structure bombée forme la partie infaillible (521).

7. Ensemble selon la revendication 1 ou 6, dans lequel les autres directions en dehors de la première direction comprennent une seconde direction, et la seconde direction diffère de 180 ° de la première direction.

8. Ensemble selon la revendication 1, dans lequel la première structure de positionnement comprend une nervure de fixation (531) formée à l'entrée de la rainure de montage (51), et la nervure de fixation (531) est configurée pour fixer la connexion de la première structure de positionnement (53) et de la seconde structure de positionnement (43).
